# EUROPÄISCHE PATENTANMELDUNG

(11) **EP 0 916 243 A1**
(43) Veröffentlichungstag der Anmeldung: **19.05.1999**
(21) Anmeldenummer: 98121348.1
(22) Anmeldetag: 10.11.1998
(51) Int. Cl.: A01B 39/16, A01B 39/08

(54) **Bearbeitungseinrichtung zur gezielten Bearbeitung quer zur Reihe**

(30) Priorität: 13.11.1997 DE 19750130
(71) Anmelder: Amazonen-Werke H. Dreyer GmbH & Co. KG, D-49205 Hasbergen (DE)
(72) Erfinder: Böttger, Oliver Dipl.-Ing., 49152 Bad Essen (DE); Naescher, Jürgen Prof. Dr.-Ing., 49545 Tecklenburg (DE); Wisserodt, Eberhard Prof. Dr.-Ing., 48369 Saerbeck (DE); Kemper, Martin Dipl.-Ing., 49205 Hasbergen (DE)

(57) **Zusammenfassung**

Bearbeitungseinrichtung für das Arbeiten in Reihenkulturen, wie beispielsweise Mais oder Zuckerrüben, aber auch Gemüse- oder Baumschulpflanzungen, die an einem Werkzeugträger (1) ein zwischen den Pflanzen wirkendes Werkzeug (2) aufweist, etwa in Form eine Hackwerkzeugs, falls es sich um eine Hackbearbeitung handelt und die in mindestens einer Ausführung an jeder Reihe längs vorbeigeführt wird wobei eine elektronische Steuerung mit Sensorik die Position der Pflanzen erfaßt und die Bearbeitung steuert. Der zu seiner Drehachse radial nach außen gerichtete Werkzeugträger (1) ist koaxial zu einem Antrieb gelagert und kann sich wahlweise um seine Achse frei drehen oder wird über eine Schaltkupplung (4,11,14,15) mit dem Antrieb gekoppelt.

## Beschreibung

Die Erfindung betrifft eine Bearbeitungseinrichtung für eine gezielte Bearbeitung quer zur Reihe in Reihenkulturen wie Mais oder Zuckerrüben, aber auch Gemüse- oder Baumschulpflanzungen, wobei die Bearbeitungseinrichtung in Abhängigkeit von einem Signal einer Sensorik zur Erfassung der Kulturpflanzen gesteuert wird.

Speziell mit dem Ziel einer Beikrautbekämpfung quer zur Reihe in Reihenkulturen sind Patentanmeldungen für Einrichtungen bekannt, die, gesteuert durch einen Sensor zur Erfassung der Position der Kulturpflanzen, eine gezielte Bearbeitung quer zur Reihe ermöglichen sollen. In allen Fällen wird davon ausgegangen, daß über eine Steuerung die jeweilige Einrichtung parallel zur Reihe geführt wird.

Eine Gruppe dieser Einrichtungen nutzt nichtmechanische oder strömungsmechanische Einwirkungsmöglichkeiten wie große Temperaturveränderungen, Wasserdruck oder Druckluft (DE 43 02 198 C2, DE 24 24 096, WO 93/09660, DE 43 39 329 C2). Diese Einrichtungen haben in der Regel eine flächige Wirkungsweise. Die Nutzpflanzen können nur mit hohem technischen Aufwand vor der Wirkung der Einrichtungen geschützt werden. Bei hoher Fahrgeschwindigkeit ist dies besonders problematisch.

Bei einer weiteren Gruppe von Einrichtungen zur Beikrautbekämpfung kommen Hebelmechanismen zum Einsatz, die eine Hackeinrichtung quer zur Reihe schwenken und so eine Hackbearbeitung durchführen (G 93 00 093.6, DE 39 16 852 C1, Österreich 173887, Frankreich 91 15674, DE 42 05 231 C2). Diese Lösungen sind dadurch gekennzeichnet, daß sie diskontinuierlich arbeiten und beim Einschwenken und Ausschwenken hohe Beschleunigungskräfte erfordern, dies besonders bei kürzeren Pflanzenabständen. Darüber hinaus ist in der Regel nach dem Einschwenken und Ausschwenken ein Umsteuervorgang erforderlich, der die Bearbeitungsfrequenz sehr stark begrenzt.

Bekannt ist der Vorschlag für eine rotierend angetriebene Querhackeinrichtung (DE P44 11 080.4 - 27). Bei dieser Einrichtung wird das Hackmesser an einem permanent angetriebenen Rotor gelagert und über ein Getriebe mit einer koaxial zu der Drehachse des Rotors angeordneten Welle verbunden. Die Welle ist feststellbar, bzw. an den Antrieb des Rotors ankuppelbar, wobei das Hackmesser im festgestellten Zustand der Welle eine seitlich über den Rotor hinausgehende Hackbewegung vollführt und im angekuppelten Zustand der Welle vorzugsweise innerhalb des Rotors mit diesem umläuft. Gesteuert wird die Einrichtung in Abhängigkeit von einem Sensor, der die Position der einzelnen Kulturpflanzen in der Reihe erfaßt. Das Prinzip dieser Einrichtung ist dadurch gekennzeichnet, daß ein Getriebe erforderlich ist, was die Konstruktion aufwendig macht. Darüber hinaus sind bei dieser Einrichtung aufgrund der erfindungsgemäß notwendigen Übersetzung ins Schnelle sehr hohe Beschleunigungsmomente während der Schaltvorgänge erforderlich. Diese müssen über eine mit hoher Frequenz schaltende Kupplungs- Bremskombination aufgebracht werden. Die Schaltfrequenz setzt dabei der Lösung Grenzen. Kennzeichnend ist auch, daß auf unterschiedliche Pflanzenabstände nur durch Reduzierung der Hackvorgänge oder Veränderung der Drehgeschwindigkeit reagiert werden kann. Letzteres ist bei hohen Hackfrequenzen aufgrund der großen Schwungmassen technisch problematisch.

### Beschreibung des neuen, erfindungsgemäßen Verfahrens

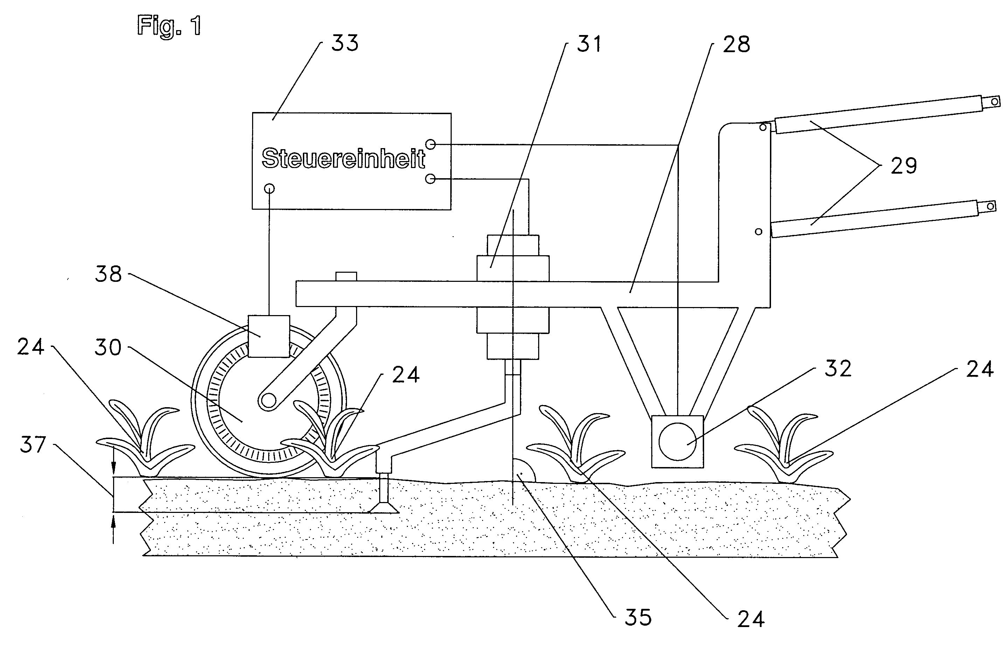

Die eingangs beschriebene Aufgabe wird durch eine Bearbeitungseinrichtung mit dem kennzeichnenden Merkmal des Anspruchs 1 in sehr einfacher Weise gelöst. In einer beispielhaften Ausführung wird sie in einem Geräterahmen zusammen mit der Sensorik zur Erfasssung der Kulturpflanzen an der Pflanzenreihe vorbeigeführt (Figur 1).

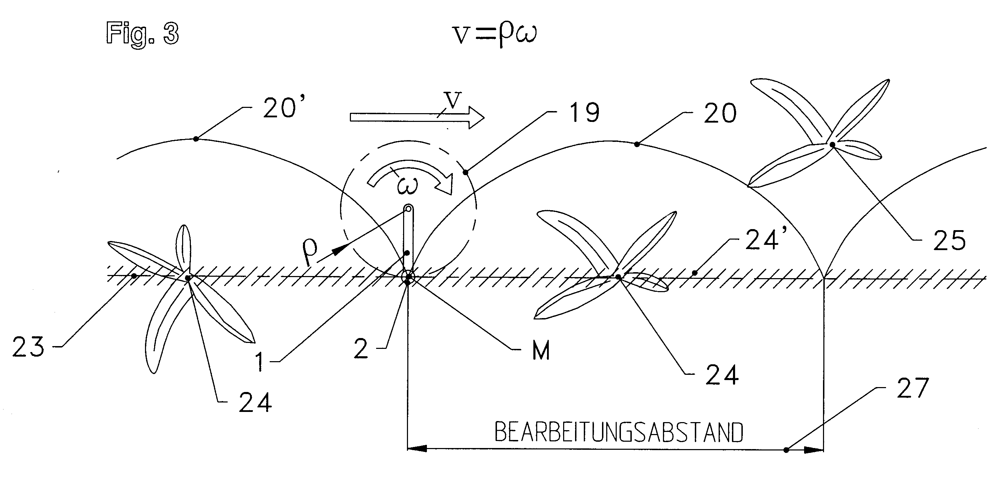

Grundlegender Gedanke der Erfindung ist das Nutzen einer Zykloidenbahn beim Bearbeiten quer zur Reihe. Punkte, die mit einer, auf einer Geraden abrollenden, kreisförmigen Scheibe verbunden sind, durchlaufen relativ zur Geraden Zykloidenbahnen (Figur 3). Der Kreis, auf dem die Scheibe abrollt, ist der Rollkreis.

Erfindungsgemäß besitzt die Bearbeitungseinrichtung einen umlaufenden Werkzeugträger, dessen Rotationsachse senkrecht zum Boden steht und der im Geräterahmen in einer Längsbewegung an der Reihe vorbeigeführt wird. In Abhängigkeit von der Winkelgeschwindigkeit (ω) des Werkzeugträgers und der Längsgeschwindigkeit (v) des Geräterahmens ergibt sich ein fiktiver Rollkreis (Radius ρ), der nicht mit einer der an dem Werkzeugträger ausgeführten Kreiskonturen zusammenfallen muß und eine fiktive Gerade, die den Rollkreis Momentanpol M berührt und parallel zur Pflanzenreihe verläuft. Die zykloidische Bahnform eines Punktes, z.B. eines Werkzeugs auf dem Werkzeugträger ist von seinem Abstand zum fiktiven Rollkreis abhängig und bildet sich in entsprechend unterschiedlicher, charakteristischer Weise aus (Figur 3).

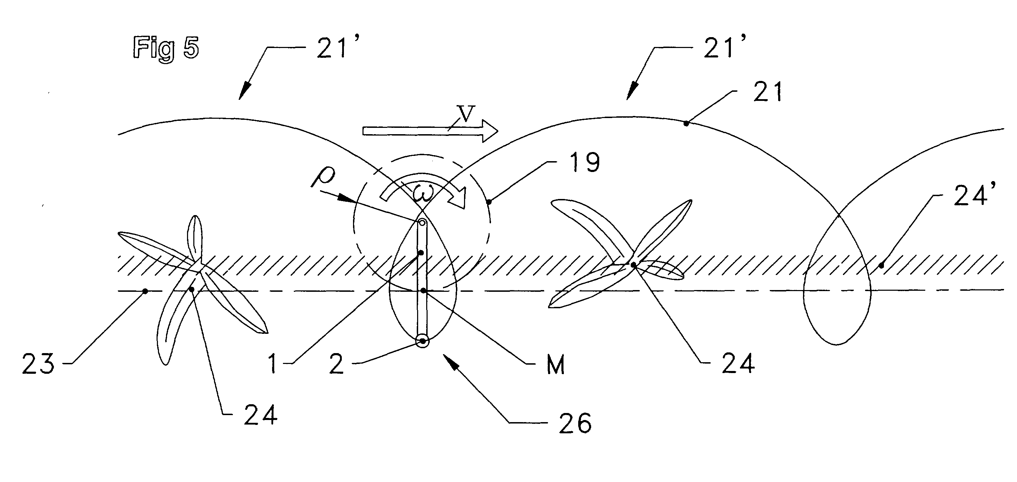

Ist das Werkzeug in einer Ausführungsform ein Hackwerkzeug, so wird längs der Werkzeugbahn gehackt, während die konkaven Bögen auf der einen Seite der Zykloidenbahn oder die Zwickel auf der anderen Seite ausgespart bleiben. In ihnen können zum Beispiel die Kulturpflanzen stehen, die nicht gehackt werden dürfen. Ein Zykloidenbogen überspannt dabei die Länge des Rollkreisumfangs, d.h. der Rollkreisumfang entspricht dem Hackabstand. Es kann also mit einer solchen Bearbeitungseinrichtung bei all den Pflanzenreihen eine Bearbeitung quer zur Reihe durchgeführt werden, bei denen die Kulturpflanzen im Abstand des Rollkreisumfangs stehen. Der Rollkreisumfang ist bei gegebenen Abmessungen von Werkzeugträger und Werkzeug durch die Veränderung von Winkel- und/oder Längsgeschwindigkeit zu beinflussen. Eine Veränderung des Rollkreises bedingt in diesem Fall gleichzeitig auch eine Veränderung der Bahnform. Soll die Bahnform des Werkzeugs bei jeder Geschwindigkeit des Geräterahmens erhalten bleiben, so muß die Winkelgeschwindigkeit des Werkzeugträgers entsprechend angepaßt werden. Für die Bearbeitung quer zur Reihe und bei Nutzung der konkaven Bereiche der Zykloiden für die Schonung der Kulturpflanzen ist es nach Figur 5 in der Regel vorteilhaft, das Werkzeug auf einem Radius anzuordnen, der größer als der Rollkreisradius ist. In diesem Fall bilden sich Bearbeitunsschleifen heraus, die bei der Bearbeitung quer zur Reihe auf die erforderlichen Bearbeitungsbreite abgestimmt werden können. Dies geschieht über die Wahl eines entsprechenden Verhältnisses von Winkel- und Längsgeschwindigkeit und über einen Werkzeugträger, dessen Durchmesser verändert werden kann.

Da die Abstände der Nutzpflanzen bei Reihenkulturen streuen, ist es erforderlich, die Bearbeitung zeitweilig zu unterbrechen. Dies geschieht erfindungsgemäß dadurch, daß Antrieb und Werkzeugträger entkoppelt werden. Es ist eine besonderer Vorteil dieser Erfindung, daß das Werkzeug nach dem Entkoppeln selbssteuernd eine Bahn anfährt, die außerhalb der Reihe der Kulturpflanzen liegt und daß auf diese Weise nicht mehr quer zur Reihe gearbeitet wird. Zwei Beispiele stellen zwei prinzipielle Lösungen dar.

### Beispiel 1

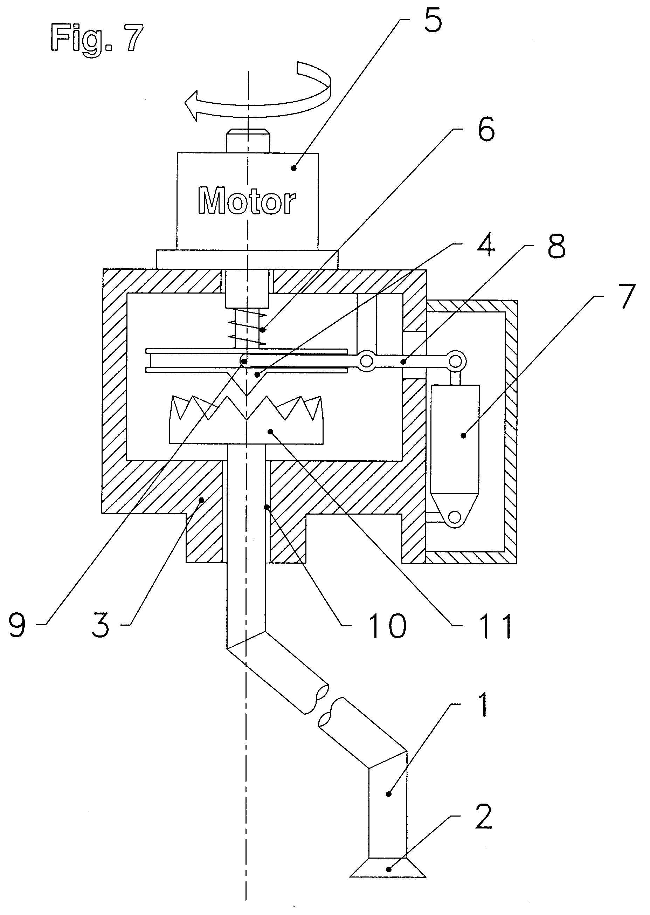

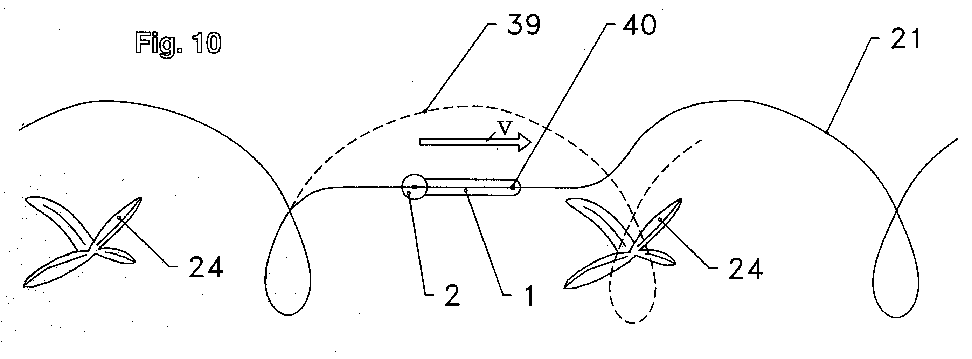

In Figur 7 sind in einer Ausführungsform nach Anspruch 1 der Antrieb und der Werkzeugträger mit dem Werkzeug kooxial durch eine Schaltkupplung gekoppelt. Aufgrund der senkrecht zum Boden stehenden Rotationsachse hat das Werkzeug ständig Bodenkontakt. Das Werkzeug läuft bei geschlossener Kupplung auf einer zykloidischen Bearbeitungsbahn. Beim Trennen der Kupplung wird das Werkzeug freigeschaltet. Es dreht nicht mehr weiter sondern stellt sich durch die Schleppwirkung des Bodenkontaktes parallel zur Pflanzenreihe und wirkt nicht mehr quer zur Reihe (Figur 10). Nach dem Schließen der Kupplung erfolgt wieder eine Hackbearbeitung auf der Zykloidenbahn, wobei die Kupplung sinnvollerweise nur so lange geöffnet bleibt, bis sichergestellt ist, daß die Bearbeitungsbewegung die Kulturpflanze nicht mehr beeinträchtigt. Der Bearbeitungsabstand, der dem Umfang des Rollkreises entspricht, wird auf diese Weise verlängert. Die kleinste mögliche Verlängerung des Bearbeitungsabstands ist abhängig vom kleinsten Schaltwinkel der Kupplung. Wird der Rollkreis so gewählt, daß er dem kleinsten erforderlichen Pflanzenabstand entspricht, so können dieser Abstand und praktisch alle größeren Abstände bearbeitet werden. Gegenüber aussetzenden Systemen ist dies ein wesentlicher Vorteil.

Bildet man die Schaltkupplung als Sicherheitskupplung aus, so kann der Werkzeugträger beim Auftreten eines Hindernisses freigeschaltet werden. In diesem Fall muß durch die Steuerung dafür gesorgt werden, daß die Kupplung erst wieder zuschaltet, wenn keine Kulturpflanze getroffen wird.

### Beispiel 2

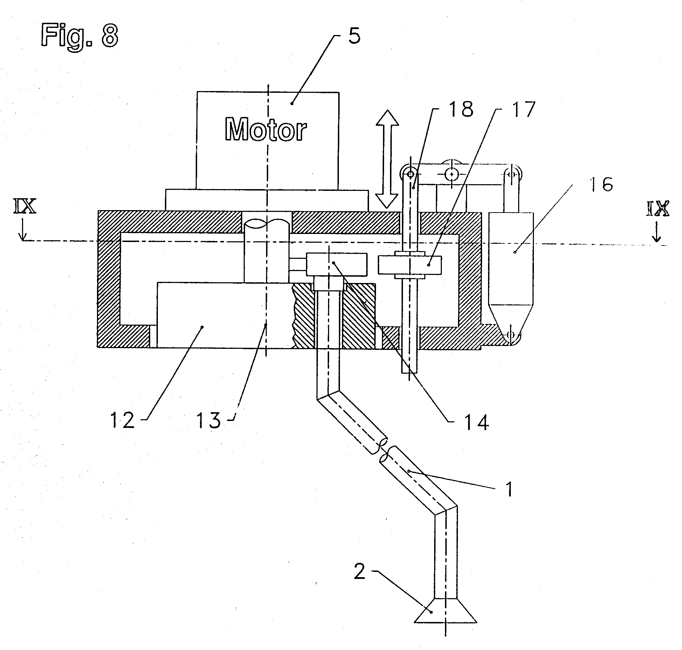

In Figur 8 treibt in einer Ausführungsform nach den Ansprüchen 1 und 3 der Antrieb eine Rotorscheibe an, in der der Werkzeugträger außerhalb der Drehachse des Rotors, aber parallel zu ihr gelagert ist. In der Bearbeitungsposition verbindet eine Schaltkupplung Rotor und Werkzeugträger drehfest, wobei das Werkzeug radial nach außen steht. Das Werkzeug führt in dieser Position auf einer zykloidischen Bahn eine Bearbeitung durch. Das Werkzeug hat aufgrund der senkrecht zum Boden ausgerichteten Rotationsachse ständigen Bodenkontakt.

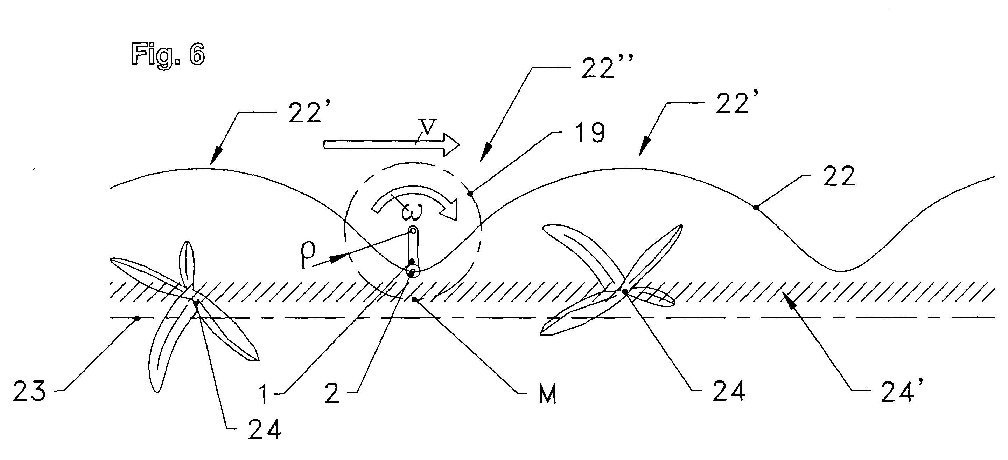

Soll die Bearbeitung, z.B. das Hacken unterbrochen werden, so wird über die Kupplung die drehfeste Verbindung von Werkzeugträger und Rotor aufgehoben. Die Achse des Werkzeugträgers auf dem Rotor beschreibt eine Zykloidenbahn nach Figur 6, die nicht mehr in die Reihe hineinreicht. Werkzeugträger und Werkzeug sind um ihre Rotationsachse frei beweglich und werden durch die Schleppwirkung des Bodens von den Nutzpflanzen ferngehalten. Eine Hackbewegung quer zur Reihe findet in diesem Fall nicht statt. Auch hier ist es erfindungsgemäß von großem Vorteil, daß sich das Bearbeitungsorgan selbst 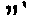 steuert".

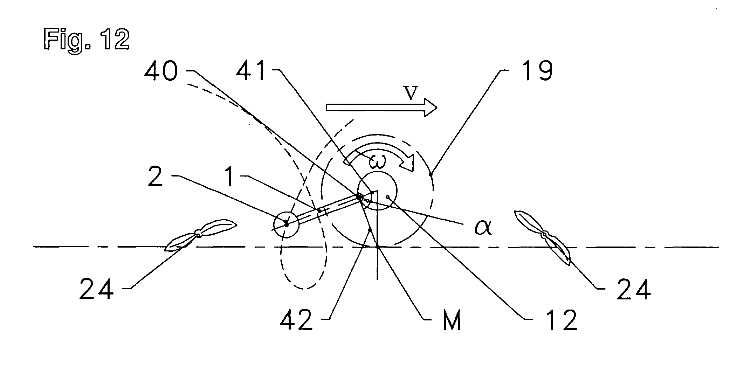

Ein erneutes Koppeln von Rototor und Werkzeugträger soll erfindungsgemäß dann erfolgen, wenn der Werkzeugträger durch die Schleppbewegung automatisch, ohne zusätzliche Steuermaßnahmen, in eine radiale Position zum Rotor und damit in die Bearbeitungsposition gestellt wird. Diese, für die dynamische Beanspruchung des Systems günstige Position (Figur 12), wird einmal pro Umdrehung des Rotors erreicht. Sinnvoller Weise erfolgt auch in dieser Position das Öffnen der Kupplung. Der Bearbeitungsabstand dieser Bearbeitungseinrichtung entspricht dem jeweiligen Rollkreisumfang oder ganzen Vielfachen hiervon.

Werden auf der Rotorscheibe ein zweiter oder weitere Werkzeugträger gelagert, so ist es möglich, den Bearbeitungsabstand, der dem fiktiven Rollkreisumfang entspricht, entsprechend zu verkürzen. Es müssen in diesem Fall entsprechend viele Schaltkupplungen an den Werkzeugträgerlagerungen angeordnet sein.

Die Erfindung ist im einzelnen anhand von Ausführungsbeispielen beschrieben, die prinzipiell folgendes darstellen:
- Fig. 1: Seitenansicht eines Geräterahmens mit Bearbeitungseinrichtung und Sensorik,

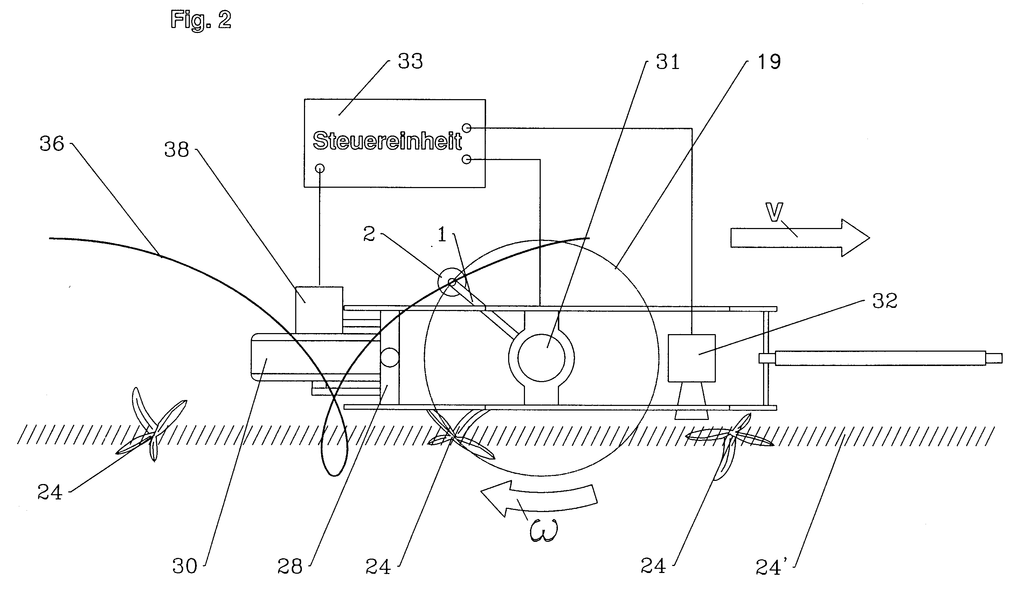

- Fig. 2: Draufsicht eines Geräterahmens mit Bearbeitungseinrichtung und Sensorik,
- Fig. 3: Darstellung von Rollkreis und einer ersten möglichen Zykloidenbahnen für eine Bearbeitung quer zur Reihe, wobei die Nutzpflanzen in dem konkaven Bogen stehen,
- Fig. 4: Darstellung von Rollkreis und einer ersten möglichen Zykloidenbahnen für eine Bearbeitung quer zur Reihe, wobei die Nutzpflanzen in dem Zwickel stehen,
- Fig. 5: Darstellung von Rollkreis und einer verlängerten Zykloidenbahnen eine Bearbeitung quer zur Reihe,
- Fig. 6: Darstellung von Rollkreis und einer verkürzten Zykloidenbahnen für eine Bearbeitung quer zur Reihe,
- Fig. 7: Bearbeitungseinrichtung mit einem koaxial zum Antrieb angeordneten Werkzeugträger,
- Fig. 8: Bearbeitungseinrichtung mit einem außerhalb der Rotationsachse Antriebs angeordneten Werkzeugträger,

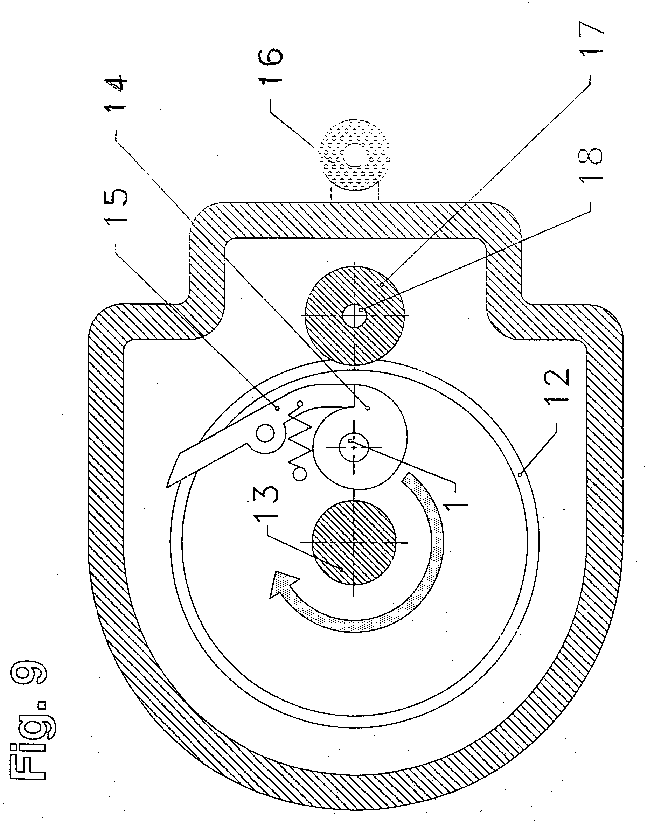

- Fig. 9: Bearbeitungseinrichtung nach Fig. 8 in der Ansicht IX - IX,
- Fig. 10: Bahnverläufe bei ausgekuppeltem Werkzeugträger für eine Bearbeitungseinrichtung nach Fig. 7,
- Fig. 11: Bahnverläufe bei ausgekuppeltem Werkzeugträger für eine Bearbeitungseinrichtung nach Fig. 8 und
- Fig. 12: eine optimierte Schaltposition bei einer Bearbeitungseinrichtung nach Fig. 8.

Fig. 1 zeigt die Seitenansicht und die Draufsicht eines Geräterahmens 28 für eine Bearbeitungsrichtung zur gezielten Bearbeitung quer zur Reihe. Der Geräterahmen ist auf einer Seite über eine Parallelogrammführung 29 an einem Geräteträger abgestützt und auf der anderen Seite durch ein höhenverstellbares Stützrad 30. Der Geräterahmen nimmt die Bearbeitungseinheit 31, die Sensorik 32 zur Ortung der Nutzpflanzen 24 und die Steuereinheit 33 zur Steuerung der Bearbeitungseinrichtung 31 auf. Der Geräterahmen wird in Richtung des Geschwindigkeit v längs der Nutzpflanzen 24 der Pflanzenreihe 24', die durch die die Bandbreite einer Pflanzenreihe 24' symbolisierenden schraffierten Bereich dargestellt ist, geführt. Der Werkzeugträger 1 mit dem Werkzeug 2 rotiert mit der Winkelgeschwindigkeit ω um die Rotationsachse der Bearbeitungseinrichtung 31. Diese steht senkrecht zur Bodenoberfläche 35. Relativ zum Boden bewegt sich das Werkzeug auf einer Zykloidenbahn 36 um die Kulturpflanzen herum. Die Bearbeitungstiefe 37 wird durch die Höheneinstellung des Stützrades 30 bestimmt. Die Sensorik 32 erfaßt die Position der Pflanzen 24 und leitet die Information an die Steuerinheit 33 der Bearbeitungseinheit weiter. Mit dem Stützrad 30 ist eine Winkelmeßeinrichtung 38 verbunden, die ein Zuordnen von Pflanzenposition zu Sensorik- und Bearbeitungsposition ermöglicht bzw. realisiert.

Die Fig. 3, 4, 5 und 6 stellen für einen Rollkreis 19 mit dem Rollradius ρ und dem Momentanpol M drei mögliche Zykloidenbahnen 20, 21, 22 dar. Der Rollkreis rollt schlupffrei auf der Wälzgeraden 23 ab. Er bewegt sich in Richtung der eingetragenen Längsgeschwindigkeit v und führt hierbei eine Drehbewegung in Richtung der eingetragenen Winkelgeschwindigkeit ω aus. Die Form der Zykloidenbahn ist abhängig von der relativen Lage des Werkzeugs zum Rollkreis.

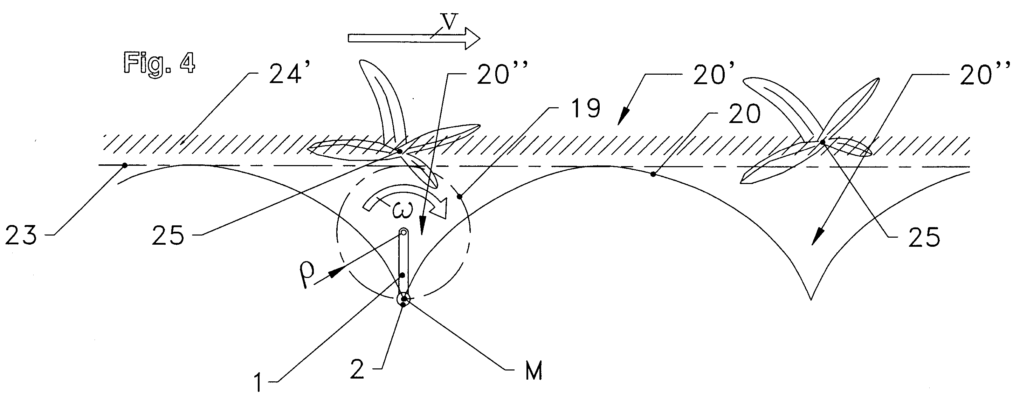

Fig. 3 und 4 zeigt eine 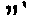 Zykloide" 20, wenn das Werkzeug auf dem Rollkreis liegt, Fig. 5 zeigt eine 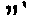 verlängerte Zykloide" 21 bei einer Werkzeuglage außerhalb des Rollkreises und Fig. 6 zeigt, bei Lage des Werkzeugs innerhalb des Rollkreises, eine 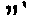 verkürzte Zykloide" 22.

Ist die Zykloidenbahn 21, 22, 20', 21', 22' der Zykloiden 20, 21, 22 auch die Bearbeitungsbahn, so werden Pflanzen 24, die im konkaven Bogen oder im Zwickel 20'' der Zykloiden 20, 21, 22 stehen, bei der Bearbeitung von dem Werkzeug 2 nicht getroffen. Dies zeigt, daß Bearbeitungseinrichtungen 31, deren Werkzeugbahnen 2 Zykloiden 20, 21, 22 sind, in idealer Weise zum Bearbeiten quer zur Reihe eingesetzt werden können. Besonders 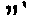 verlängerte Zykloiden" 21 (Fig. 5) sind hierbei von Bedeutung. Die Form und die Breite der Schleife 26 dieser Zykloidenbahnen 21 ist abhängig vom Abstand des Werkzeugs 2 zum Rollkreis 19. Über den Abstand kann sie an die Bearbeitungsaufgabe in idealer Weise angepaßt werden. Der Bearbeitungsabstand 27 wird durch den Umfang des Rollkreises 19 festgelegt. Der Rollkreis 19 ist für die Form der Bearbeitungsbahn demnach von entscheidender Bedeutung. Seine Abmessungen sind abhängig von der Vorfahrtgeschwindigkeit v und der Winkelgeschwindigkeit ω, beide Größen bestimmen einen 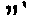 fiktiven" Rollkreis 19, der an einer entsprechend 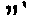 fiktiven" Wälzgeraden 23 abrollt.

Die Wälzgerade 23 verläuft parallel zur Pflanzenreiche 24', sie muß jedoch nicht in der Mitte der Pflanzenreiche 24' liegen, sondern zu der Pflanzenreihe 24 etwas verschoben sein, wie beispielsweise Fig. 3 zeigt.

Figur 7 zeigt den prinzipiellen Aufbau einer Bearbeitungseinrichtung nach Anspruch 1. Der Werkzeugträger 1 mit dem Werkzeug 2 ist im Gehäuse 3 gelagert und kann über die Schaltkupplung 4 und 11 mit dem Antriebsmotor 5 koaxial verbunden werden. Die beiden Scheiben der Schaltkupplung sind planverzahnt 11, wobei auf der Motorseite nur ein Zahnpaar angeordnet ist. Die planverzahnten Scheiben werden im Betrieb durch die Feder 6 so zusammengedrückt, daß das erforderliche Drehmoment übertragen werden kann. Soll der nächst folgende Bearbeitungsvorgang zu einem späteren Zeitpunkt ausgefüht werden, so öffnet aufgrund eines Schaltsignals der Hydrozylinder 7 über das Schaltgestänge 8 und die Schaltgabel 9 die Kupplung, so daß der Werkzeugträger in seiner Lagerung 10 frei umlaufen kann, während der Motor weiterläuft. Durch die Schleppwirkung des Bodens wird der Werkzeugträger in eine Bahn nach Fig. 10 gezwungen. Frühestens nach dem Durchlaufen einer Zahnteilung der Schaltkupplung kann der Werkzeugträger wieder mit dem Antrieb verbunden werden. In diesem Fall wird der Hydrozylinder 7 geöffnet und die Feder 6 drückt die beiden Kupplungshälften zusammen. In der dargestellten Ausführung kann die Schaltkupplung auch als Sicherheitskupplung ausgeführt werden. Der Schrägungswinkel der Verzahnung 11 und die Steifigkeit der Feder 6 bestimmen das Drehmoment, bei dem die Kupplungshälften auseinandergedrückt werden, wenn das Werkzeug 2 vor ein Hindernis fährt. Es kann in einigen Fällen sinnvoll sein, anstelle des nicht angetriebenen Werkzeuges 2 ein beispielsweise gegenüber dem Werkzeugträger 1 rotierend oder schwingend angetriebenes Werkzeug am Werkzeugträger 1 anzuordnen. Hierdurch wird ein größerer Bearbeitungsbereich erzielt.

Fig. 8 zeigt eine Bearbeitungseinrichtung nach den Ansprüchen 1 und 3, bei der der Werkzeugträger 1 auf einem Rotor 12 außerhalb der Rotorachse 13 gelagert ist 40. Rotor und Antriebsmotor 5 sind fest gekoppelt und laufen ständig um. In der Bearbeitungsposition, bei der Werkzeugträger und Werkzeug radial nach außen weisen, verbindet eine Schaltkupplung 14 und 15 Rotor und Werkzeugträger drehfest, so daß beide miteinander umlaufen. Die Schaltkupplung besteht aus Nockenrad 14 und federgespannter Schaltklinke 15. Soll ein Bearbeitungsvorgang nicht ausgeführt werden, so bewegt ein Hydrozylinder 16, aufgrund eines Steuersignals, ein Schaltelement 17 auf einem Schieber 18 in die Bahn der Schaltklinke 15 und löst die drehstarre Verbindung von Rotor und Werkzeugträger. Der Wekzeugträger kann dann frei in seiner Lagerung auf dem Rotor umlaufen, wird aber durch die Schleppwirkung des Bodens in eine Bahn entsprechend Figur 6 gezwungen. Er dreht sich während einer Rotorumdrehung einmal um seine eigene Achse. Befindet sich das Schaltelement 17 nach einer Rotorumdrehung nicht mehr in der Bahn der Schaltklinke, weil aufgrund eines entsprechenden Steuersignals der Hydrozylinder 16 zurückgestellt wird, so werden Werkzeugträger und Rotor wieder fest gekoppelt und ein neuer Bearbeitungszyklus beginnt. Auch hier kann bei entsprechender Gestaltung die Schaltkupplung 14 und 15 als Sicherheitskupplung ausgebildet werden.

Fig. 10 gibt wieder, in welcher Weise sich die Wekrzeugbahn ausbildet, wenn die Schaltkupplung 4 und 11 des Bearbeitungsgeräts nach Fig. 7 geöffnet wird. Werkzeugträger 1 und Werkzeug 2 stellen sich aufgrund der Schleppwirkung des Bodens so ein, daß das Werkzeug in Richtung der Längsbewegung v 39 an der Pflanze 24 der Pflanzenreihe 24' vorbeigeführt wird. Nach Schließen der Schaltkupplung bewegt sich das Werkzeug wieder auf der zykloidischen Werkzeugbahn 21.

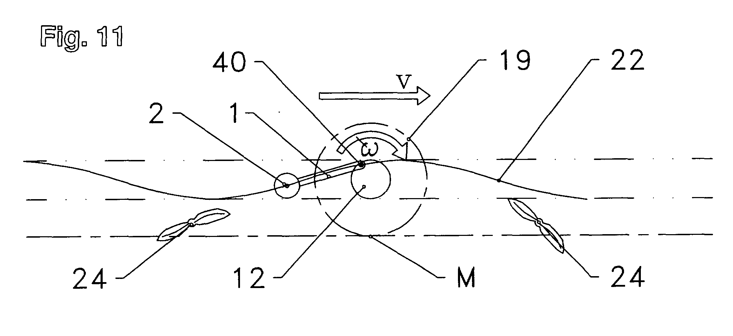

Fig. 11 zeigt die Verhältnisse bei einem Bearbeitungsgerät nach Fig. 8, wenn die Kupplung 14 und 15 die drehfeste Verbindung von Rotor und Werkzeugträger gelöst hat. Die Lagerstelle 40 im Rotor bewegt sich auf einer verkürzten Zykloide 22 und schleppt den Werkzeugträger aufgrund des Bodenkontaktes. Er liegt in jeder Stelle tangential zur verkürzten Zykloide und wird so an der Pflanze 24 der Pflanzenreihe 24' vorbeigeführt.

Fig. 12 bezieht sich auf ein Bearbeitungsgerät nach Fig. 8 und zeigt für den Fall, daß die Schaltkupplung 14 und 15 geöffnet ist, eine Stellung von Rotor 12 und Werkzeugträger 1, in der die Verbindungslinie 41 von Lagerachse 40 und Rotorachse 13 einen rechten Winkel α mit der Verbindungslinie 42 von Momentanpol M und Lagerachse 40 bilden. In dieser Stellung ist die Relativgeschwindigkeit der Lagerachse 40 gegenüber dem Boden auf die Rotorachse 13 gerichtet und der Werkzeugträger 1 steht aufgrund der Schleppwirkung in einer radialer Position zum Rotor 12. Er ist damit automatisch, allein durch die Schleppwirkung in die radiale Bearbeitungsposition gestellt worden. Soll ein neuer Bearbeitungszyklus beginnen, so wird die Schaltkupplung 14 und 15 in diese Stellung wieder einrasten.

## Patentansprüche

1. Bearbeitungseinrichtung für das Arbeiten in Reihenkulturen, wie beispielsweise Mais oder Zuckerrüben, aber auch Gemüse- oder Baumschulpflanzungen, die an einem Werkzeugträger ein zwischen den Pflanzen wirkendes Werkzeug aufweist, etwa in Form eine Hackwerkzeugs, falls es sich um eine Hackbearbeitung handelt und die in mindestens einer Ausführung an jeder Reihe längs vorbeigeführt wird wobei eine elektronische Steuerung mit Sensorik die Position der Pflanzen enfaßt und die Bearbeitung steuert, **dadurch gekennzeichnet**, daß der zu seiner Drehachse radial nach außen gerichtete Werkzeugträger (1) koaxial zu einem Antrieb (5) gelagert ist und sich wahlweise um seine Achse frei drehen kann oder über eine Schaltkupplung (4, 11, 14, 15) mit dem Antrieb (5) gekoppelt wird.

2. Bearbeitungseinrichtung nach Anspruch 1, **dadurch gekennzeichnet**, daß der Antrieb (5) ständig umläuft, die Drehachse des Wekrkzeugträgers (1) senkrecht zur Bearbeitungsfläche ausgerichtet ist und das Werkzeug (1) auf der Bearbeitungsfläche ständigen Bodenkontakt hat, wobei sich das Werkzeug (1) wahlweise, gesteuert über die Sensorik (32) und die Kupplung (4, 11, 14, 15), bei geöffneter Kupplung aufgrund der Schleppwirkung des Bodens hinter der Drehachse auf einer Bahn parallel zur Reihe bewegt oder bei geschlossener Kupplung (4, 11, 14, 15) aufgrund der gleichzeitig auftretenden Längs- und Drehbewegung auf einer zykloidisch verlaufenden Bahn im Abstand der Zykloidenbögen in die Reihe hineinwirkt und die Bearbeitungsbewegung durchführt.

3. Bearbeitungseinrichtung nach Anspruch 1, **dadurch gekennzeichnet**, daß der Werkzeugträger (1) in einem Rotor (12) außerhalb der Drehachse (13) des Rotors (12) aber parallel zu ihr gelagert ist und sich wahlweise um die eigene Drehachse frei bewegen kann oder aber mit dem Rotor (12) in einer radial nach außen stehenden über den Rotor (12) hinausragenden Position drehsteif mittels einer Kupplung (14, 15) verbunden werden kann.

4. Bearbeitungseinrichtung nach den Ansprüchen 1 und/oder 3, **dadurch gekennzeichnet**, daß sich die Drehachse des Werkzeugträgers auf einem Kreis bewegt, dessen Durchmesser kleiner ist als der des vom Verhältnis Längs- zu Winkelgeschwindigkeit bestimmten kinematischen Rollkreises.

5. Bearbeitungseinrichtung nach einem oder mehreren der Ansprüche 1,3 und 4, **dadurch gekennzeichnet**, daß der Rotor (12), durch einen Antrieb (5) angetrieben, ständig umläuft, die Drehachsen des Rotors und des Werkzeuträgers senkrecht zur Bearbeitungsfläche ausgerichtet sind und das Werkzeug auf der Bearbeitungsfläche ständigen Bodenkontakt hat wobei sich das Werkzeug wahlweise, gesteuert über die Sensorik (32) und die Kupplung, bei geöffneter Kupplung aufgrund der Schleppwirkung des Bodens hinter der Drehachse des Werkzeugträgers auf einer Bahn außerhalb der Reihe bewegt oder bei geschlossener Kupplung aufgrund der gleichzeitig auftretenden Längs- und Drehbewegung auf einer zykloidisch verlaufenden Bahn im Abstand der Zykloidenbögen in die Reihe hineinwirkt und die Bearbeitungsbewegung durchführt.

6. Bearbeitungseinrichtung nach einem oder mehreren der Ansprüche 1 oder 3 und/oder 4, **dadurch gekennzeichnet**, daß sich das Werkzeug (2) auf einem Flugkreis bewegt, dessen Durchmesser größer ist als der des vom Verhältnis Längs- zu Winkelgeschwindigkeit bestimmten kinematischen Rollkreises, wobei die Zykloidenbahn quer zur Reihe keulenförmig verläuft und in ihrer Keulenbreite durch den Abstand des Werkzeugs vom Rollkreis der Bearbeitungssituation angepaßt werden kann.

7. Bearbeitungseinrichtung nach einem oder mehreren der Ansprüche 1 oder 3 und/oder 4, **dadurch gekennzeichnet**, daß eine Steuereinrichtung (33) die Winkelgeschwindigkeit des rotierenden Antriebs (5) an die jeweilige Längsgeschwindigkeit (v) anpaßt und damit die Werkzeugbahn bei gegebenem Flugkreis des Werkzeugs (2) bestimmt.

8. Bearbeitungseinrichtung nach den Ansprüchen 1 oder 3, **dadurch gekennzeichnet**, daß mehrere Bearbeitungseinrichtungen hintereinander längs der Reihe angeordnet sind.

9. Bearbeitungseinrichtung nach den Ansprüchen 1 oder 3, **dadurch gekennzeichnet**, daß die Kupplung (4, 11, 14, 15) mechanisch, hydraulisch, pneumatisch oder elektromechanisch betätigt wird, wobei sie gleichzeitig auch drehmomentbegrenzend ausgebildet werden kann.

10. Bearbeitungseinrichtung nach den Ansprüchen 3 und/oder 4, **dadurch gekennzeichnet**, daß bei geöffneter Kupplung (4, 11, 14, 15) der geschleppte Werkzeugträger (1) in einer durch den Bewegungsablauf von Rotor und Werkzeugträger bestimmten Rotorstellung in eine radiale Position zum Rotor geführt wird, wobei in dieser Position die Kopplung von Rotor und Werkzeug erfolgen kann.

11. Bearbeitungseinrichtung nach den Ansprüchen 3 und/oder 4, **dadurch gekennzeichnet**, daß der Rotor (12) leicht schräg mit Neigung zur Reihe geführt wird und daß der Bodenkontakt mit dem Werkzeug nur über einen Teilbereich der Rotorumdrehung erfolgt, wobei ein nicht starr gekoppeltes Werkzeug (2) nur in diesem Bereich zwangsweise durch die Schleppbewegung geführt wird und im anderen Bereich durch die Fliehkraft in einer radialen Position zum Rotor steht, wobei in dieser Position die Kopplung von Rotor (12) und Wekzeug (1) erfolgen kann.

12. Bearbeitungseinrichtung nach den Ansprüchen 3 und 4, **dadurch gekennzeichnet**, daß auf einem Rotor (12) mehrere hintereinanderwirkende Werkzeugträger (1) angeordnet sind, wobei die Kupplungen (14, 15) über eine oder mehrere Betätigungseinrichtungen (16) gesteuert werden können.

13. Bearbeitungseinrichtung nach einem oder mehreren der vorstehenden Ansprüche, **dadurch gekennzeichnet**, daß das Werkzeug (2) gegenüber dem Werkzeugträger (1) antreibbar ist.
